# EUROPEAN PATENT SPECIFICATION

(11) **EP 0 321 585 B1**
(45) Date of publication and mention of the grant of the patent: **23.02.1994**
(21) Application number: 88906039.8
(22) Date of filing: 25.06.1988
(51) Int. Cl.: B29C 45/76, B29C 45/50, B29C 45/57

(54) **DEVICE FOR DETECTING THE MOST ADVANCED POSITION OF SCREW**
VORRICHTUNG ZUM ERMITTELN DER MEIST VORGESCHOBENEN STELLUNG EINER SCHNECKE
DISPOSITIF SERVANT A DETECTER LA POSITION LA PLUS AVANCEE D'UNE VIS

(30) Priority: 25.06.1987 JP 156428/87
(43) Date of publication of application: 28.06.1989
(73) Proprietor: FANUC LTD., Minamitsuru-gun, Yamanashi 401-05 (JP)
(72) Inventor: KAMIGUCHI, Masao Room 6-207, Fanuc Manshonharimomi, Minamitsuru-gun Yamanashi 401-05 (JP); NEKO, Noriaki Fanuc, Dai 3 Virakaramatsu, Minamitsuru-gun Yamanashi 401-05 (JP); SAITO, Osamu Fanuc Dai 3 Virakaramatsu, Minamitsuru-gun Yamanashi 401-05 (JP)
(74) Representative: Billington, Lawrence Emlyn
(86) International application number: JP8800637
(87) International publication number: WO8810187

(56) References cited:
- JP-A- 623 916
- PATENT ABSTRACTS OF JAPAN, vol. 11, no. 6 (M-551)[2453], 8th January 1987;& JP-A-61 182 913 (JAPAN STEEL WORKS LTD) 15-08-1986

## Description

The present invention relates to an apparatus for detecting a forwardmost position assumed by a screw during injection and hold operations in an electrically-operated injection molding machine.

The forwardmost position assumed by the screw during injection and hold operations is recognized to be one of various factors, including injection speed, injection pressure, hold pressure, die temperature, molten resin temperature, clamping force, back pressure, etc., for determining whether or not injection molding is carried out in a good condition.

In the injection and hold processes, the screw is moved forward to perform injection, and thereafter, a shift from an injection control to a hold control is made when the screw reaches a predetermined position, or when a predetermined period of time has elapsed from the start of injection, or when the injection pressure reaches a predetermined pressure, so as to control the hold pressure to a predetermined pressure. In this connection, conventionally, the forwardmost screw position or the most advanced screw position is recognized to be equal to a position at which the hold operation is ended.

In an electrically-operated injection molding machine of a type wherein a motor is employed as a drive source for advancing the screw for injection and hold operations, and, during the hold operation, the output torque of the motor is restricted so as to control the hold pressure to a predetermined value, the hold end position is not always equal to the forwardmost screw position due to presence of reaction from the molten resin.

Moreover, the forwardmost screw position in each injection molding cycle can affect the quality of the resultant molded products, and therefore, such position can be an important factor for setting optimum molding conditions.

Examples of prior publications in which screw positions are detected in an injection molding machine are JP-A-62-3916 and JP-A-61-182913. The latter publication is in accordance with the preamble of attached claim 1.

The object of the present invention is to provide an apparatus for detecting an actual forwardmost screw position, without the need of utilizing the hold end position as the forwardmost screw position.

The above-mentioned object is achieved according to the present invention by an apparatus as defined in claim 1.

A particular embodiment of the invention is disclosed in the dependent claim 2.

As mentioned above, according to the present invention, since the forwardmost screw position is detected on the basis of the screw positions detected and stored at predetermined intervals of sampling cycle during injection and hold processes, the forwardmost screw position can be accurately detected as compared with the prior art wherein the hold end position is presumed to be equal to the forwardmost screw position, resulting in facility of setting of injection molding conditions and the alteration of the thus set conditions, so that high quality molded products can be produced, and bad products can be easily found out.

### Brief Description of the Drawings

Fig. 1 is a block diagram showing part of an injection molding machine which is equipped with a detecting apparatus according to an embodiment of the present invention;
Fig. 2 is a view showing the structure of a RAM, shown in Fig. 1, for storing screw positions;
Fig. 3 is a flowchart of part of a task for main processing executed by the injection molding machine of Fig. 1;
Fig. 4 is a flowchart of a task for final address setting; and
Fig. 5 is a flowchart of a task for detecting the forwardmost screw position.

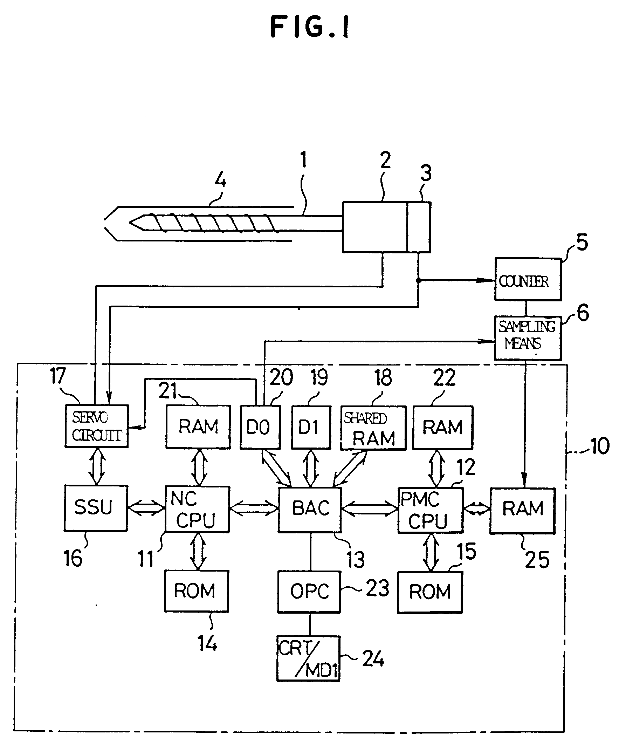

Fig. 1 is a block diagram showing part of an embodiment of the present invention, in which reference numeral 1 denotes a screw; 2, a servomotor for injection axis, which operates to axially drive the screw 1 through a transmission unit (not shown); 3, a pulse coder, as a position detector, mounted on the motor shaft of the servomotor 2 for detecting the rotational position of the servomotor to detect the position of the screw 1; and 4, a heating cylinder. Further, reference numeral 10 denotes a numerical control unit (hereinafter referred to as NC unit) which includes a microprocessor (hereinafter referred to as CPU) 11 for numerical control, and a CPU 12 for a programmable machine controller (hereinafter referred to as PMC). Connected to the PMCCPU 12 are a ROM 15 storing therein sequence programs such as a program for detecting the forwardmost screw position during injection and hold processes, mentioned later, a RAM 22 for temporal storage of data, and a RAM 25 for storing screw positions at predetermined intervals of sampling cycle. A ROM 14, which stores a control program for generally controlling the injection molding machine, is connected to the NCCPU 11 to which servo circuits (only one servo circuit is shown by reference numeral 17) are connected through a servo interface 16, these servo circuits being operable to control the drive of servomotors (only an injection servomotor is shown by reference numeral 2) for individual axes such as injection, clamping, screw rotation, ejector axes. Further, reference numeral 18 denotes a non-volatile shared RAM which consists of a bubble memory or a CMOS memory, and stores therein an NC program for controlling various processes of the injection molding machine, various preset values, various parameters, etc. Reference numeral 13 denotes a bus arbiter controller (hereinafter referred to as BAC) to which NCCPU 11, PMCCPU 12, shared RAM 18, input circuit 19 and output circuit 20 are connected through busses, the BAC 13 being operable to select the bus to be used. Further, reference numeral 24 denotes a manual data input device (hereinafter referred to as CRT/MDI) with a CRT display device, which is connected to the BAC 13 through an operator panel controller 23. Reference numeral 21 denotes a RAM for temporal storage of data or the like, which is connected to the NCCPU 11 through a bus.

The servo circuit 17 is arranged to be supplied with an output from the pulse coder 3 for position/speed control of the screw 1, and the same output is applied to a reversible counter 5, which is operable to count up positive/negative pulses supplied from the pulse coder 3 while the servomotor 2 rotates in the forward and reverse directions, with the screw advanced (i.e., in the direction toward the tip of the heating cylinder 4, or, to the left in Fig. 1) and retracted. This count value of the counter 5, indicative of the screw position, is written into the RAM 24 through sampling means 6.

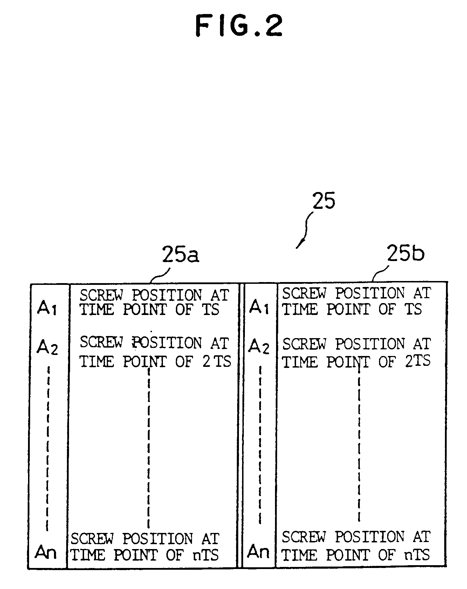

As shown in Fig. 2, the RAM 25 is of a two buffer type, wherein memory regions 25a and 25b are alternatively utilized in an associated injection molding cycle, to which the value of the counter 5, i.e., the screw position is written at predetermined intervals of timing cycle TS. The sampling means 6 starts its operation in response to a signal supplied from the output circuit 20 upon generation of an injection start command, and reads out the value of the counter 5 at intervals of timing cycle TS. Further, the sampling means 6 writes the value into one 25a of the memory regions of the two buffer type RAM 25 from a first address A1 of the memory region 25a, with the address of the same region incremented. Thereafter, in response to a signal supplied from the output circuit upon generation of a hold end signal, the sampling means 6 clears another memory region 25b of the RAM 25, and then stops its operation. In the next injection and hold processes, the sampling means 6 operates to write the screw position into the memory region 25b of the RAM 25 at intervals of timing cycle TS.

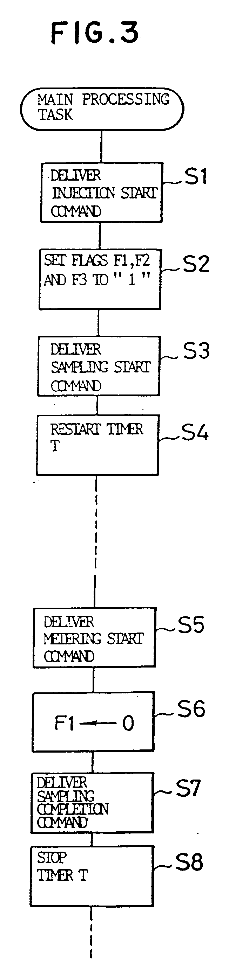

In the following, the operation of the apparatus according to the aforementioned embodiment will be explained with reference to Figs. 3 - 5.

Upon start of an injection molding operation, the PMCCPU 12 executes, at predetermined intervals of cycle, a task for main processing, which relates to a sequence control for the injection molding operation including mold-closing, mold-clamping, injection, hold, metering, mold-opening and other processes. As shown in Fig. 3 in which part of the main processing task to which the present invention relates, is illustrated, the PMCCPU 12 delivers a mold-clamping end signal as an injection start command to the NCCPU 11 through the BAC 13 and the shared RAM 18. Upon reading out the same signal through these elements 13 and 18, the NCCPU 11 drives the servomotor 2 through the servo interface 16 and the servo circuit 17 so as to start the injection process (the step S1). On the other hand, the PMCCPU 12 sets a flag F1 indicative of the injection/hold processes being carried out, a flag F2 to be utilized for a processing of final address setting, mentioned later, and a flag F3 to be utilized for a processing of detecting the forwardmost screw position, to "1", respectively (the step S2). Then, the PMCCPU 12 delivers a sampling start command to the sampling means 6 through the BAC 13 and the output circuit 20, and causes a timer T to be reset and to start (the steps S3 and S4).

As the screw 1 driven by the servomotor 2 is advanced, the output pulses supplied from the pulse coder 3 are counted up by the counter 5. The value in this counter 5, indicative of the current screw position, is read out by the sampling means 6 at intervals of sampling cycle TS, and is written into one of the memory regions of the RAM 25, the memory region 25a, for instance. More specifically, at a first sampling point of time TS, the screw position at that time is written into the address A1 of the memory region 25a, and the screw position at a second sampling time 2TS is written into the address A2. Subsequently, the sampling means 6 writes, at intervals of sampling cycle TS, the screw position corresponding to each sampling time into an associated address of one memory region 25a of the RAM 25, with the address incremented.

When the injection and hold processes are completed, a hold end signal, i.e., a metering start command is delivered from the PMCCPU 12 to the NCCPU 11 through the BAC 13 and the shared RAM 18. In response to this, the NCCPU 11 drives the servomotor for metering (not shown), so as to start the metering process (the step S5). After delivering the metering start command, the PMCCPU 12 resets the flag F1 to "0" at the step S6, and then delivers a sampling completion command to the sampling means 6 through the BAC 13 and the output circuit 20 (the step S7), and causes the timer T to stop (the step S8). When receiving the sampling completion command, the sampling means 6 resets the values, stored in the addresses A1 - An of another memory region 25b of the RAM 25, to "0", respectively, and then stop its operation.

As a consequence, various positions assumed by the screw 1 during the injection and hold processes in one injection molding cycle have been stored in the addresses A1 - An of one memory region 25a of the RAM 25, respectively.

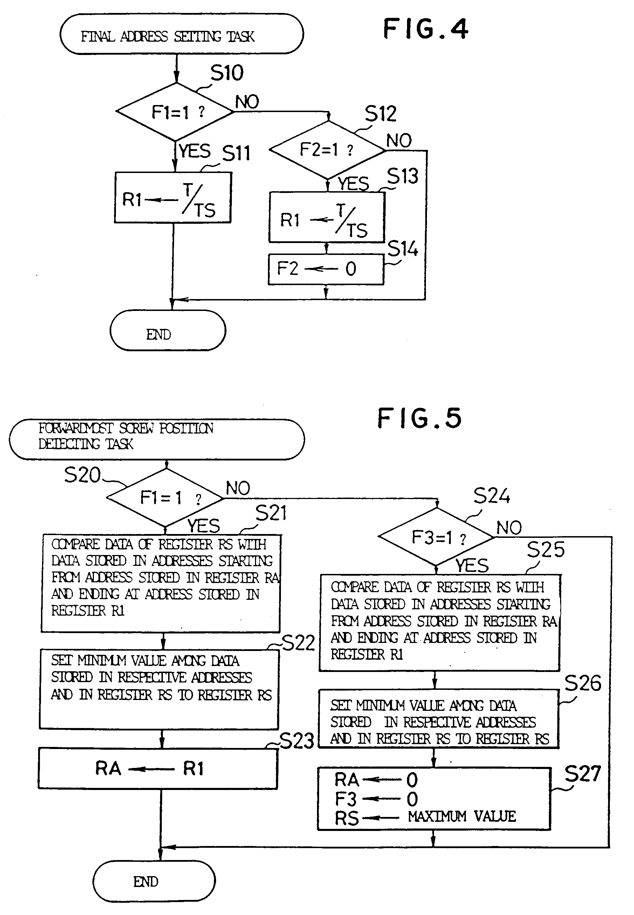

The PMCCPU 12 executes the task for final address setting, shown in Fig. 4, at intervals of cycle longer than that for the task shown in Fig. 3. According to this final address setting, if the flag F1 is set at "1" or the injection and hold processes are being carried out, the PMCCPU 12 divides the value T of the timer, which indicates a period of time elapsed from the instant at which the injection process starts (as shown by the step S4 of Fig. 3), by the sampling cycle TS of the sampling means 6, so as to calculate how many times the sampling operation has been carried out, or calculate that address of one memory region 25a of the RAM 25 up to which the screw position has been stored, and then causes the calculated result T/TS to be stored in a register R1. As a consequence, the register R1 stores the current final address into which the screw position is lastly written (the steps S10 and S11). On the other hand, if it is determined that the flag F1 is set to "0" at the step S10, that is, when the flag F1 has been reset to "0" at the step S6 of Fig. 4 and hence the hold process has been completed, the program advances to the step S12 wherein a determination is made as to whether the flag F2 is set to "1" or not. If it is determined that the same flag F2 is set to "1", the same process as the step S11 is carried out. That is, the final address value T/TS obtained by dividing the value T of the timer by the sampling cycle TS is stored in the register R1 (the step S13), and the flag F2 is reset to "0" (the step S14). The processing of the steps S12 - S14 for obtaining the final address is provided for the reason that, if the hold process is completed and hence the flag F1 is set to "0" during a time period, starting from the instant at which the processing of the steps S10 and S11 for final address setting is completed and ending prior to the execution of the same processing S10 and S11 in the next cycle, one or more positions assumed by the screw prior to completion of the hold process are further written so that the final address is renewed. As a result of providing the steps S12 - S14, the final address of the memory region 25a to which the screw position is, in actual, lastly stored during the injection and hold processes can be obtained. In the meantime, during any process other than the injection and hold processes, since the flags F1 and F2 are set to "0", no substantial process is carried out in the final address setting process of Fig. 4, with the processing of the steps S10 and S12 solely performed.

Moreover, the PMCCPU 12 executes the task for detecting the forwardmost screw position, shown in Fig. 5, at intervals of cycle longer than that for the final address setting of Fig. 4. In this forwardmost screw position detecting task, a determination is made as to whether or not the flag F1 is set to "1", i.e., whether or not the injection and hold processes are being carried out at the step S20. If it is determined that F1 = 1, i.e., such processes are being carried out, the data (screw positions) stored in a series of addresses, starting from the final address obtained by the forwardmost screw position detecting process in the preceding cycle and stored in a register RA, and ending at the final address obtained by the steps S11 and S13 and stored in a current register R1, are each compared with the stored content of a register RS, indicative of the forwardmost screw position obtained by the forwardmost screw position detecting process in the preceding cycle (the step S21). In the meantime, the register RA is initialized at the start of the operation of the injection molding machine so as to be set at "0", and, in this embodiment, the coordinate in the injection molding machine is set so that the screw position is decreased with the advancement of the screw and hence the minimum screw position indicates the forwardmost screw position. Further, the register RS is initialized to assume its maximum value upon start of the operation of the injection molding machine.

Subsequent to the step S21, the minimum value among the data subjected to the aforementioned comparison is stored in the register RS at the step S22. As a consequence, the forwardmost screw position up to the current cycle has been stored in the register RS. Thereafter, the data stored in the register R1 is transferred to the register RA so as to write the final address up to the current cycle into the same register RA (the step S23). Subsequently, in this task, the processing of the steps S20 - S23 is repeatedly performed as long as the flag F1 is set to "1" or the injection and hold processes are being carried out. On the other hand, in the same task for forwardmost screw position detection which starts immediately after the hold process is completed and the flag F1 is set to "1" at the step S6 of Fig. 3, a shift is made from the step S20 to the step S24, and then, since the flag F3 is still set to "1" at that time, the step S25 is entered. In this step, the same processing as that of the step S21 is carried out. More specifically, the screw positions stored in a series of addresses, starting from the final address in the preceding cycle and ending the final address stored in the current register R1, are each compared with the data stored in the register RS and indicative of the forwardmost screw position up to the preceding cycle (the step S25), to determine the minimum screw position among these stored data, and causes the CRT/MDI 24 to display the same on its CRT display screen (the step S26). As a result, the forwardmost screw position during the injection and hold processes concerned is displayed on this screen. Thereafter, the register RA is cleared to "0", the flag F3 is cleared to "0", and the maximum value is stored in the register RS (the step S27), to thereby complete the processing for detection of the forwardmost screw position during the injection and hold processes concerned. Incidentally, during the execution of any process other than the injection and hold processes, the flags F1 and F3 are kept maintained at "0", and hence, no substantial processing is carried out in the forwardmost screw position detecting task because the processing of the steps S20 and S24 alone is executed.

In the next injection and hold processes, detected screw positions are written into another memory region 25b of the RAM 25, and the aforementioned processing is performed. Subsequently, the detected screw positions are alternately written into either one of the memory regions 25a and 25b, and the aforementioned processing is performed.

Although the two buffer type RAM 25 having two memory regions is employed in the aforementioned embodiment, a memory having a single memory region may be utilized.

Moreover, in the above-mentioned embodiment, the current forwardmost screw position is always detected at predetermined intervals of cycle during the injection and hold processes, so as to make it possible to detect and display the forwardmost screw position immediately after the injection and hold processes are completed. Alternatively, the detection of the forwardmost screw position may be made upon completion of injection and hold processes on the basis of screw positions each sampled at corresponding sampling cycle and stored in the RAM 25. In this case, the forwardmost screw position detecting processing sometime requires a long period of time for execution, and such processing cannot be completed within an associated injection molding cycle, and still continues in the next molding cycle. This results in the resultant forwardmost screw position being recognized for the next cycle, and hence lacking usefulness. If this kind of inconvenience occurs, it is necessary to shorten the execution time for forwardmost screw position detecting process, as in the aforementioned embodiment, so as to ensure that the forwardmost screw position is detected within the associated injection molding cycle.

## Claims

1. An apparatus for detecting a screw position for use in an injection molding machine, comprising
means (3,5) for detecting actual screw positions and characterised by:
storage means (25);
sampling means (6) for reading out the actual screw positions detected by said detecting means (3,5) at predetermined intervals of sampling cycle (TS) during injection and hold processes, and for writing these screw positions into said storage means (25);
means (12) for detecting a forwardmost screw position on the basis of the screw positions written into said storage means (25); and
the injection molding machine being electrically operated.

2. An apparatus for detecting a forwardmost screw position according to claim 1, wherein said forwardmost screw position detecting means (12) includes means for detecting, at predetermined first intervals of cycle, a final address of said storage means (25) into which an associated screw position is lastly written, and comparison means for executing a comparison process at predetermined second intervals of cycle, said comparison means being operable to compare data stored in a series of addresses of said storage means (25), starting from a final address obtained by a preceding comparison process and ending at a final address lastly detected by said final address detecting means, with a forwardmost screw position obtained by the preceding comparison process, so as to obtain a current forwardmost screw position.

## Patentansprüche

1. Vorrichtung zum Detektieren der Stellung eines Gewindes zur Verwendung in einer Spritzgußmaschine, mit
einer Detektoreinrichtung (3, 5) zum Detektieren tatsächlicher Gewindestellungen,
**gekennzeichnet durch**
eine Speichereinrichtung (25),
eine Abtasteinrichtung (6) zum Auslesen der von der Detektoreinrichtung (3, 5) während eines Spritz- und Halteprozesses in vorbestimmten Abtastzyklusintervallen (TS) detektierten tatsächlichen Gewindestellungen und Einschreiben dieser Gewindestellungen in die Speichereinrichtung (25),
eine Detektoreinrichtung (12) zum Detektieren einer vorgeschobensten Gewindestellung auf der Basis der in die Speichereinrichtung (25) eingeschriebenen Gewindestellungen, und
elektrischen Betrieb der Spritzgußmaschine.

2. Vorrichtung nach Anspruch 1,
**dadurch gekennzeichnet,**
daß die Detektoreinrichtung (12) zum Detektieren der vorgeschobensten Gewindestellung eine Einrichtung zum Detektieren in vorbestimmten ersten Zyklusintervallen einer Endadresse der Speichereinrichtung (25), in die eine zugeordnete Gewindestellung zuletzt geschrieben wird, und eine Vergleichseinrichtung zur Ausführung eines Vergleichsprozesses in vorbestimmten zweiten Zyklusintervallen aufweist, wobei die Vergleichseinrichtung in einer Adressenreihe der Speichereinrichtung (25) gespeicherte Daten beginnend mit einer in einem vorhergehenden Vergleichsprozeß gewonnenen Endadresse und bei einer von der Detektoreinrichtung zum Detektieren der Endadresse zuletzt detektierten Endadresse endend mit einer im vorhergehenden Vergleichsprozeß gewonnenen vorgeschobensten Gewindestellung vergleicht, um laufend eine vorgeschobenste Gewindestellung zu erhalten.

## Revendications

1. Un appareil servant à détecter une position de vis utilisable dans une machine de moulage par injection, comprenant
des moyens (3, 5) pour détecter des positions réelles de la vis et caractérisé par :
des moyens de stockage (25) ;
des moyens d'échantillonnage (6) pour lire les positions réelles de la vis détectées par lesdits moyens de détection (3, 5) à des intervalles déterminés à l'avance d'un cycle d'échantillonnage (TS) pendant des processus d'injection et de maintien, et pour inscrire ces positions de la vis dans lesdits moyens de stockage (25) ;
des moyens (12) pour détecter une position la plus avancée de la vis sur la base des positions de la vis inscrites dans lesdits moyens de stockage (25) ; et
la machine de moulage par injection étant actionnée de manière électrique.

2. Un appareil servant à détecter une position la plus avancée d'une vis selon la revendication 1, dans lequel lesdits moyens (12) pour détecter une position la plus avancée de la vis comprennent des moyens pour détecter, à de premiers intervalles déterminés à l'avance du cycle, une adresse finale desdits moyens de stockage (25) dans laquelle une position associée de la vis est inscrite en dernier lieu, et des moyens de comparaison pour effectuer un processus de comparaison à de seconds intervalles déterminés à l'avance du cycle, lesdits moyens de comparaison étant actionnables pour comparer des données stockées dans une série d'adresses desdits moyens de stockage (25), en commençant depuis une adresse finale obtenue par un processus de comparaison précédent et en finissant à une adresse finale détectée en dernier lieu par lesdits moyens de détection de l'adresse finale, avec une position la plus avancée de la vis obtenue par le processus de comparaison précédent, afin d'obtenir une position actuelle la plus avancée de la vis.
